# EUROPEAN PATENT SPECIFICATION

(11) **EP 0 995 146 B1**
(45) Date of publication and mention of the grant of the patent: **15.01.2003**
(21) Application number: 98932512.1
(22) Date of filing: 15.07.1998
(51) Int. Cl.: G02F 1/15

(54) **ELECTROCHROMIC DEVICE**
ELEKTROCHROME VORRICHTUNG
DISPOSITIF ELECTROCHROMIQUE D'ATTENUATION OU DE FILTRAGE DE LA LUMIERE

(30) Priority: 15.07.1997 IT PD970160
(43) Date of publication of application: 26.04.2000
(73) Proprietor: ISOCLIMA S.p.A., 35042 Este (Padova) (IT)
(72) Inventor: MOSINI, Filippo, (IT); BERTOLINI, Alberto, I-35042 Este (IT); GAVRILOV, Vladimir, Dolgoprudny, Moscow Region, 141700 (RU); SHELEPIN, Igor, Dolgoprudny, Moscow Region, 141700 (RU)
(74) Representative: Jorio, Paolo, Dr. Ing.
(86) International application number: IT9800198
(87) International publication number: WO99004316

(56) References cited:
- EP-A- 0 612 826
- EP-A- 0 725 304
- WO-A-95/30495
- WO-A-96/03475
- US-A- 3 567 453
- US-A- 4 902 108
- DATABASE WPI Section Ch, Week 9816 Derwent Publications Ltd., London, GB; Class A14, AN 98-177589 XP002084002 & RU 2 087 510 C (MAKROMER CO LTD) , 20 August 1997 cited in the application
- DATABASE WPI Section Ch, Week 9705 Derwent Publications Ltd., London, GB; Class A14, AN 97-050261 XP002084003 & RU 2 059 666 C (BURIN S V), 10 May 1996 cited in the application

## Description

### TECHNICAL FIELD

The present invention relates to an electrochromic light-attenuation or -filtration device comprising an electrochromic composition having at least a solvent, at least a cathodic electrochromic component, and at least an anodic electrochromic component.

More specifically, the present invention relates to organic-compound-based electrochromic compositions from which to produce reversible electrochromic light-attenuation devices such as adjustable-light-transmission optical filters, automotive variable-reflection rearview mirrors, automotive sun roofs, windows for various building applications, etc.

### BACKGROUND ART

Light-attenuation devices employing organic electrochromic materials for variable light transmission, variable light reflection and light transmission are known from USA Patent N. 4,902,108 (Ref.1) and European Patent Application N. 0 612 826 A1 (Ref. 2). An essential requirement of electrochromic devices is the use of highly reversible organic electrochromic compositions, which include: a composition employing diperchlorate or methylviologen ditetrafluoborate or 3-ethyl-2-benzthiazolazine in an organic solvent solution (see Shelepin et al. "Electrochimiya" 13, 32-37, 1977 (Ref. 3)), and a modified composition in which 5,10-dihydro-5,10-dimethylphenazine is used as the anodic component (see Shelepin et al. "Electrochimiya" 13, 404-408, 1977 (Ref. 4)). Organic electrochromic compositions are also known in which 4,4'-dipyridine salts are extended, and 5,10-dihydro-5,10-dimethylphenazine and its derivatives are used as the anodic component, as well as other known compounds which form reversible redox-pairs when electrooxidized (Ref. 1). Various organic solvents are used, such as dimethylformamide, propylene carbonate, γ-butyrolactone, etc. (Ref. 1, 2, 3, 4).

In general, all electrochromic devices employing an electrochemically active liquid solution are subject to segregation of the electrocoloured state of the compounds, which results in nonuniform fade time of different regions of the cell, and consequently in nonuniform fading of cyclically operated devices, especially when subjected to prolonged direct current. Using a cathodic component of 4,4'-dipyridine salts with volumetric anions, such as dicarbo-11-carborate in combination with ferrocene derivatives or 5,10-dihydro-5,10-dimethylphenazine in γ-butyrolactone or propylene carbonate (see USSR Patent Application N.972815 (5) and International Patent Application N. WO 96/02017 (6)) provides, under certain conditions, for eliminating gravitational segregation and stabilizing the fade time of the electrochromic liquid material layer when subjected to prolonged direct-current voltage. Using the above materials, gravitational segregation of small-area electrochromic devices may in fact be eliminated when the voltage drop on the surface of the optically transparent electrodes is negligible. Violating the equipotentiality of the electrodes, which have an ohmic final resistance, however, results in the formation of an optical absorption gradient and eventually in another negative effect, that of anode-cathode segregation. Despite the erroneous belief in the second effect being caused solely by migration of charged particles in the electric field between two electrodes (Ref. 1), a solution - employing thickeners and a particular arrangement of the current supply bars for vertical electrochromic devices - has been found when two segregations of the coloured forms of the electrochromic components partially compensate each other.

Producing solid organic electrochromic compositions is therefore, basically, the one and only correct way of obtaining large-size electrochromic light-attenuation devices of good uniform coloration and absolutely no gravitational segregation. On the other hand, forming the solid or gelatinous state of the electrochromic material using photopolymerizing monomeric compositions maintaining ionic conductivity can hardly be considered a discovery (Ref. 2), even though such use is known, is characterized by simplicity, and may be used on a large scale in the future. The statement - undoubtedly correct - in Ref. 2 concerning the elimination of gravitational segregation of the electrochromic components in the polymer matrix is not backed up, in the case of prolonged biasing of the devices, by the certainty of no anode-cathode segregation caused by nonequipotentiality of the electrode surfaces during electrocolouration. The above disclosure (Ref. 2) makes no mention of methods by which to solve this problem. As the electrochromic effect is obviously based on electrolysis, the currents determining the degree of optical absorption cannot be limited to achieve a significant reduction in the voltage gradient on the optically transparent electrode surfaces. Moreover, using polymerized ultraviolet monomeric compositions (Ref. 2) creates serious difficulties involving shrinkage following polymerization directly in the cell. Using thermal cycles and maintaining low temperatures once the monomeric electrochromic composition is transformed into a solid polymeric film seriously complicates device fabrication methods; and the likelihood of shrinkage being detected decreases considerably in the event the polymerizing agent comprises an oligomer or low-molecular-weight polymer with active centers suitable for subsequent polymerization. It is very doubtful whether large-scale use can be made of the inhibitors, initiators, humectants and other additives referred to by the authors (Ref. 2) in the section dealing with the preparation of monomeric electrochromic compositions. The above additives are reaction-sensitive compounds, may interact with both the initial electrochromic components and their redox-activated state, and may even alter the surface state of the electrodes - a fairly critical factor in electrochemical processes - by including electron-transfer reactions with the aid of the organic compounds.

### DISCLOSURE OF INVENTION

It is an object of the present invention to provide an electrochromic device involving no anode-cathode segregation, and which provides for constant light absorption and no gravitational segregation, especially over large-area surfaces.

More specifically, it is an object of the present invention to provide electrochromic compositions ensuring highly homogeneous light absorption or filtration with none of the drawbacks typically associated with known electrochromic materials.

The invention is defined in independent claims 1 and 5. Accordingly, there is provided an electrochromic light-attenuation or filtration device, characterized by a photosensitive oligomeric or low-molecular-weight polymeric component which, in radiation from an electromagnetic radiation source, converts the electrochromic composition from a liquid state to a solid film state.

In particular, there is provided an electrochromic composition which, when exposed to UV rays directly in the cell (manufactures), polymerizes with no noticeable shrinkage following polymerization and attainment of the solid state.

According to a further aspect of the present invention, there is also provided an electrochromic composition containing a mixture of dipyridine salts and anions of various volumes in a ratio depending on the electric resistance and size of the electrodes and on the viscosity of the solution.

According to yet a further aspect of the present invention, there is provided a multiple-cell electrochromic device which provides for highly uniform electrocolouration, and which may be produced in various sizes and various degrees of complexity.

### BRIEF DESCRIPTION OF DRAWINGS

A preferred, non-limiting embodiment of the present invention will be described by way of example with reference to the accompanying drawings, in which:
Figure 1 shows a multiple-cell embodiment of the electrochromic device;
Figure 2 shows a detail of the supply bars for manufactures employing the electrochromic compositions according to the invention.

### BEST MODE FOR CARRYING OUT THE INVENTION

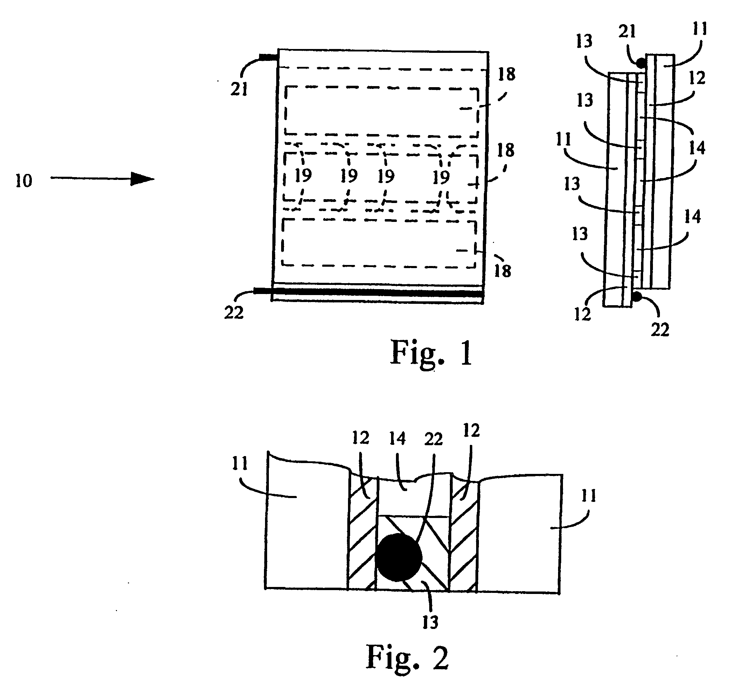

With reference to Figure 1, the electrochromic device 10 comprises two supports 11, e.g. made of glass or plastic, facing each other and coated on the adjacent faces with respective transparent current-conducting coatings 12. In the preferred embodiment shown, conducting coatings (electrodes) 12 are supplied with direct voltage by respective electric conductors or supply bars 21 and 22, and are partly insulated by insulating lines 19 defining a number of adjacent electrically connected cells 18.

Between the two electrodes 12 are interposed an electrochromic composition 14 - described in detail later on - to absorb or filter light variably and reversibly alongside a variation in the voltage applied between electrodes 12, and a number of glued joints 13 for separating cells 18 and sealing electrochromic device 10.

Using electrochromic compositions 14 according to the invention, supply bars 21 and 22 may be inserted respectively inside the glued joints 13 (Figure 2) at the ends of device 10, so that each supply bar 21, 22 is adjacent to one of the two conducting coatings 12, and the two supports 11 may be positioned facing and aligned with each other (Figures 1 and 2).

Electrochromic device 10 may of course be formed in a single-cell embodiment without departing from the scope of the invention.

The most commonly used cathodic organic electrochromic components are compounds in the dipyridine salt (viologen) class, which form redox-stable systems in the case of electrical reduction. Electrochromic compositions whose compounds include viologens with anions of various volumes show a different degree of gravitational segregation (see Ushakov et al. "Electrochimiya" 21, 918-922, 1985 (Ref. 7)) which depends on the density gradient of the catholyte and anolyte, which in turn is due to redistribution of the charged particles during electrolysis. Using viologens with large-volume anions, such as triphenylcyanborate which has the following formula : 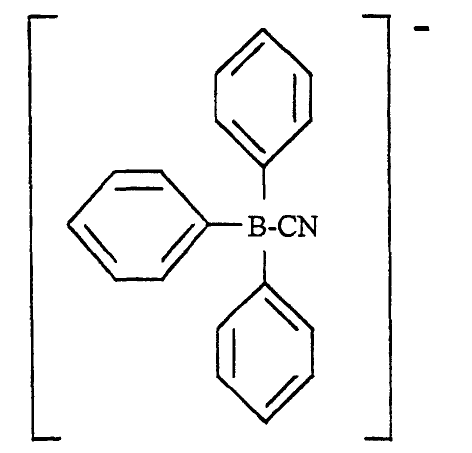 therefore greatly reduces gravitational segregation as compared with CLO₄⁻, BF₄⁻, PF₆⁻, AsF⁻ and others. Forming mixture compositions therefore enables control of the degree of gravitational segregation, which is essential for mutually compensating the two negative segregation effects - gravitational and anode-cathode - the latter being caused by nonequipotentiality of the electrodes.

For liquid and gelatinous electrochromic materials, the concentration ratio of viologens with anions of different volumes may be selected according to the resistance of the electrodes and the viscosity of the solution to achieve stable operation of electrochromic devices with no detectable segregation. This of course applies to vertical devices and when the electrodes are biased from the top and bottom.

To eliminate gravitational segregation entirely, to greatly reduce current when biasing electrochromic light-attenuation devices, and to reduce nonequipotentiality of the electrodes, the present invention proposes using liquid UV-polymerizable electrochromic compositions directly in the manufacture. The UV-polymerizable component may comprise UV-polymerizable glues in the polyacrylate class, such as Loctite 1650, Loctite 358 and others, which mix well with liquid electrochromic solutions containing solvents normally used in organic compound electrochemistry, and which in this case act as plasticizing agents. Depending on the desired final state, the weight ratio of the UV-polymerizable component to the electrochromic solution ranges from 1:10 to 10:1. The best actual ratio range is 1:3 to 3:1.

Depending on the distance between electrodes 12, on the percentage content of the photoactive component, and on the power of the UV source, polymerization may range from a few seconds to one hour. The gap between electrodes 12 may range from 20 µm to 1000 µm : the best range is 50 µm to 250 µm.

Using the above UV-polymerizable polyacrylic compositions, and by virtue of the oligomeric or low-molecular-weight polymeric base in the electrochromic mixture compositions, further polymerization practically eliminates shrinkage.

To achieve significantly more uniform darkening of electrochromic light-attenuation devices; the present invention proposes a multiple-section structure of cell 18 - defined as before by two glass or plastic supports 11 (Figure 1) - wherein electrodes 12 are insulated electrically from each other, the volume of each element of cell 18 is separated from the adjacent element by glued joint 13, and spacers are used to define a narrow gap (of up to 100 µm). Device 10 as a whole comprises a row of cells 18 connected in series in the form of strips of equal area. With this arrangement, current is reduced considerably, which is extremely important in the case of large-size devices. Depending on actual requirements, the elements may differ in area to change the current density of each cell 18. The control voltage in this case increases n times, where n is the number of elements in the mosaic pattern. The relative reduction in the capacitive component of the total current in the proposed structure provides for greatly improving the time response characteristics of electrochromic devices.

Proposed glues for fabricating the devices may comprise any epoxy, polyacrylate or other materials having a heat-setting and/or UV-setting component with or without fillers, providing they are chemically compatible with the organic-solvent-based electrochromic compositions. The glue compositions may contain gap-defining spacers in the form of calibrated solid polymer-or mineral-based particles. Another proposal is to use epoxy- or polyacrylic- or polyurethane-based glues in the form of films calibrated according to thickness, which greatly simplifies fabrication of the devices by virtue of its own simplicity and by also enabling current supply bars 21 and 22 (Figures 1 and 2) to be arranged without offsetting supports 11 with the conducting coatings. Inert silicoorganic materials may conveniently be used to seal the holes after filling.

Electrochromic solutions must comprise at least one cathodic component of 0.001M to 0.2M concentration at 25°C. In potentiodynamic curves plotted relative to three-electrode electrochromic cells, the cathodic composition solution shows at least one reversible cathode-anode wave, and, following electron transfer to the cathode potential region, forms a product with a higher degree of optical extinction in the visible spectrum region as compared with the initial form. Electrochromic solutions must also contain at least one anodic component capable of reversible electrochemical transfer of at least one electron to the anode potential region, and which, when oxidized, forms a redox form with or without a higher degree of optical extinction as compared with the initial form. Concentration of the anodic component at 25°C ranges from 0.001M to 0.2M. If necessary, the solution may contain indifferent electrolytes, or electrolytes of sufficient concentrations to make the composition ionically conductive, such as alkaline salts, alkaline-earth salts with different anions (CLO₄⁻, BF₄⁻, AsF₆⁻, PF₆⁻, etc.), or organic salts such as tetraalkylammonium.

Solvents for preparing the electrochromic compositions may comprise dimethylformamide, butyrolactone, propylene carbonate, acetonitrile, butyronitrile, and others stable in time and at the electrochemical potential work region.

To increase the viscosity of the solution, thickeners soluble in the solvents used may be added, such as polymethyl methacrylate, polyvinyl butyral, acetyl cellulose propionate, polyvinyl pyrrolidone, polyurethane, etc. in a weight concentration of 0.5 to 30%.

To improve the photochemical stability of the electrochromic compositions, these may contain a 0.1 to 20% by weight concentration of UV stabilizers, such as "UVINOL" or "TINUVIN" (registered trademarks) in the benzophenone and triazole class, as well as others.

The cathode components for preparing the solutions may comprise the following compounds:
- viologens 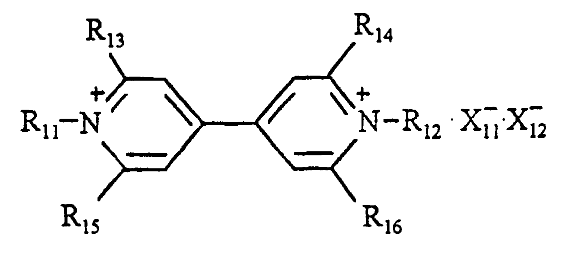 where R₁₁ and R₁₂ may be, independently of each other, alkyl groups with 1-10 carbon atoms, alkoxy groups with 1-10 carbon atoms, benzyl groups, benzyl groups with various arrangements of the 1-4-carbon-atom alkyl substitutes of each carbon atom in the benzol ring, or F, Cl, Br, I, CN; where R₁₃, R₁₄, R₁₅, R₁₆ may be, independently of one another, H or alkyl groups with 1-4 carbon atoms; where X₁₁ and X₁₂ may be CIO₄⁻⁻, PF₆⁻, AsF₆⁻, NO₃⁻ or a large-ionic-radius anion such as triphenylcyanborate.
- di(dipyridine salts) 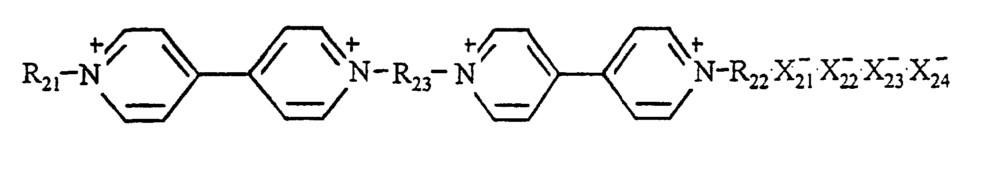 where R₂₁ and R₂₂ may be, independently of each other, alkyl groups with 1-10 carbon atoms, alkoxy groups with 1-10 carbon atoms, benzyl groups, benzyl groups with various 1-4-carbon-atom alkyl substitutes of each carbon atom in the benzol ring, or F, Cl, Br, I, CN; where R₂₃ may be an alkyl group with 1-10 carbon atoms; where X₂₁⁻, X₂₂⁻, X₂₃⁻, X₂₄⁻ may be, independently of one another, CLO₄⁻, BF₄⁻, PF₆⁻, AsF₆⁻, NO₃⁻ or a large-ionic-radius anion such as triphenylcyanborate.
- anthraquinones 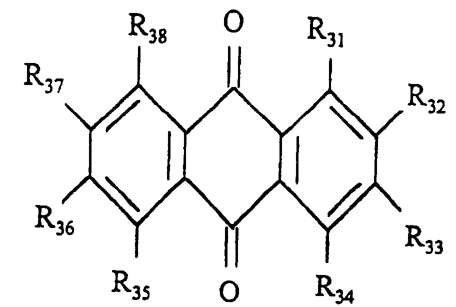
where R₃₁-R₃₈ may be, independently of one another, hydrogen, any alkyl substitute with 1-10 carbon atoms, alkoxy groups with 1-10 carbon atoms, alkoxyphenyl substitutes with 1-4 carbon atoms in the alkyl group, or alkylbenzyl substitutes with 1-4 carbon atoms in the alkyl group.

The anode components for preparing the electrochromic solutions may comprise the following known compounds:
- 5,10 dihydrophenazine, phenothiazine, phenoxazine substitutes 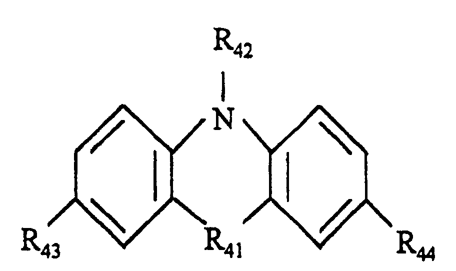 where R₄₃ and R₄₄ may be, independently of each other, hydrogen or dialkylamine groups with 1-6 carbon atoms in the alkyl substitute; where R₄₁ may be oxygen, sulfur or NR₄₅; where R₄₂ and R₄₅ may be, independently of each other, alkyl substitutes with 1-10 carbon atoms, benzyl groups, benzyl groups with various positions of the substitutes of each carbon atom in the benzol ring, alkyl substitutes with 1-4 carbon atoms, or F, Cl, Br, I, CN.
- metallocenes 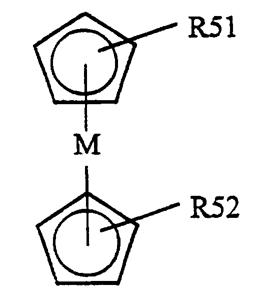
where R₅₁ and R₅₂ may be, independently of each other, hydrogen or alkyl groups with 1-10 carbon atoms; and where M may be Fe, Ni, Co, Cr, Mo, W or Ti.

For testing, the device cells were filled using any known method, e.g. vacuum filling through a hole, injection filling, sandwiching, etc. with two holes, to completely insulate (from side to side) the electrochromic compositions.

Whichever method is used must ensure maximum liberation of dissolved oxygen from the solution.

The following are examples of electrochromic devices and compositions proposed according to the present invention:

### Example 1

Two cells were fabricated from 55x100 mm glass sheets.

The optically transparent electrodes comprised ITO coatings with a surface resistance of 4.2 - 4.5 ohms/square; the gap between the electrodes was determined by interposing 130µm spacers in the glue composition; the glass sheets were shifted parallel to each other to form the current supply bars on the longer sides; and the glue comprised LI - 1650 (Loctite) UV glue with a polymerization time of one minute in radiation. from a 250 W xenon lamp (Uvahand 250).

The inner volumes were vacuum filled with the electrochromic composition, and the filler holes sealed with silicoorganic sealing material.

One cell was filled with an electrochromic solution of 0.03M diperchlorate 1,1'-dimethyl-4,4'-dipyridine and 0.03M 5,10-dihydro-5,10-dimethylphenazine in γ-butyrolactone containing 5% by weight of polymethyl methacrylate; and the second cell was filled with a solution of 0.03M ditriphenylcyanborate 1,1'-dimethyl-4,4'-dipyridine and 0.03M 5,10-dihydro-5,10-dimethylphenazine in γ-butyrolactone, containing 5% by weight of polymethyl methacrylate.

Each of the devices, positioned vertically, was supplied with voltage from a 1.2 V direct-current source so that the negative polarity was connected to the bottom current supply bar. After colouring by biasing for one hour, the voltage was cut off and the electrodes shorted. Fading showed segregation of the coloured redox forms of the electrochromic components : in the first cell - a surplus accumulation of the "reduced" blue form of the methylviologen in the form of a band at the top of the cell; in the second cell - a surplus accumulation of the blue redox form of the viologen in the form of a band at the bottom of the device, along the current supply bar.

### Example 2

A cell was fabricated from 100x110 mm glass sheets; the optically transparent electrodes comprised ITO coatings with a surface resistance of 4.2 - 4.5 ohms/square; the gap between the electrodes was determined by interposing 130µm spacers in the glue composition; the cell comprised two insulated coplanar volumes, and the electrodes were so arranged as to ensure series switching of two elements of the same area; current was supplied by bars on the 100 mm side; the glue comprised Loctite 358 UV-setting glue with a polymerization time of one minute in radiation from a 250 W xenon lamp (Uvahand 250).

The vacuum filling method was used, and the filler hole sealed with silicoorganic sealing material.

The electrochromic composition comprised 0.01M diperchlorate 1,1'-dimethyl-4,4'-dipyridine, 0.02M ditriphenylcyanborate 1,1'-dimethyl-4,4'-dipyridine, and 0.03M 5,10-dihydro-5,10-dimethylphenazine in γ-butyrolactone containing 5% by weight of polymethyl methacrylate.

The device, positioned vertically, was supplied with voltage from a 2.4 V direct-current source so that the negative polarity was connected to the bottom current supply bar. In this case, initial light transmission was 78%, which, when voltage was applied, fell to 7% in five seconds. After electrocolouring by biasing for two hours, the voltage was cut off and the electrodes shorted. In this case, fading occurred rapidly with no visible segregation of the coloured electrochromic components.

### Example 3

A cell was fabricated from 300x400 mm glass sheets with optically transparent ITO conducting coatings with a surface resistance of 6.8 ohms/square; the gap between the electrodes was determined by interposing 150µm spacers in the glue composition; the cell comprised five insulated coplanar volumes, and the electrodes were so arranged as to ensure series switching of five elements of the same area; the glue comprised Loctite 350 UV-setting glue with a polymerization time of one minute in radiation from a 250 W xenon lamp (Uvahand 250).

The vacuum filling method was used; the filler holes were sealed with silicoorganic sealing material; and the current supply bars were formed on the 400 mm side.

The electrochromic composition comprised 0.03M diperchlorate 1,1'-dimethyl-4,4'-dipyridine and 0.03M butylferrocene in γ-butyrolactone containing 5% by weight of polymethyl methacrylate.

The device was supplied with a voltage of 2.5 to 6.0 V from a direct-current source. Depending on the voltage, the device assumed different shades of blue uniformly over the surface. When the voltage was cut off, fading occurred uniformly to assume the initial pale-yellow state.

### Example 4

A cell was fabricated from 300x400 mm glass sheets with optically transparent SnO₂:F (TEC-15) conducting coatings with a surface resistance of 15 ohms/square; the gap between the electrodes was determined by interposing 190µm spacers in the glue composition; the glass sheets were shifted parallel to each other to form the current supply bars on the longer side; and the glue comprised Loctite 350 UV-setting glue with a polymerization time of one minute in radiation from a 250 W xenon lamp (Uvahand 250).

The inner volume was vacuum filled with the electrochromic composition, and the filler hole sealed with silicoorganic sealing material.

The electrochromic composition comprised 0.02M diperchlorate 4,4'-dimethyl-4,4'-dipyridine and 0.02M 5,10-dihydro-5,10-dimethylphenazine in γ-butyrolactone containing 30% by weight of Loctite LI-1650 glue.

The composition was polymerized to the solid state in radiation for one hour from a 250 W xenon lamp (Uvahand 250), with no evidence of shrinkage.

The device was supplied with a voltage of 0.6 to 1.8 V from a direct-current source, and in this case assumed different shades of blue-green. Total darkening time : 30 seconds. When the voltage was cut off and the electrodes shorted, fading occurred uniformly to assume the initial colourless state.

### Example 5

A cell was made from two 200x300 mm glass sheets with a surface resistance of 6.8 ohms/square.

The sheets were offset to form an electrode on the longer side, and were bonded about the edge with two-sided Sellotape, the thickness of which determined a gap of 300 µm between the electrodes.

The cell was injection filled with the electrochromic solution, and the hole was sealed with Loctite 352 UV-setting glue with a setting time of 20 seconds when exposed to radiation from a 250 W xenon lamp (Uvahand 250).

The electrochromic compound comprised 0.018M 1,1'-dimethyl-4,4'-dipyridine diperchlorate and 0.018M terbutyl ferrocene in γ-butyrolactone containing 37.5% by weight of photosensitive components.

The photosensitive component comprised an Enterprise "VIKOS" photosensitive composition (Russian Specification TU2435-002-32587395-96; Russian Patent N. RU 2059666C1), the monomers of which were first converted to the oligomeric state in radiation from a 250 W xenon lamp (Uvahand 250) for 40 minutes, with absolutely no segregation.

When a voltage of 0.6 to 1.5 V was supplied by a direct-current source, a light-blue colour, varying with voltage, was obtained. Total darkening time was 30 seconds. When the voltage was cut off and the electrodes shorted, the colour faded uniformly to pale yellow.

### Example 6

A cell was made from two 60x200 mm glass sheets with an ITO conductive coating with a surface resistance of 10 ohms/square.

The sheets were offset to form an electrode on the longer side, and were bonded about the edge with two-sided Sellotape, the thickness of which determined a gap of 150 µm between the electrodes.

The cell was vacuum filled with the electrochromic solution, and the hole sealed with silicoorganic sealer.

The electrochromic compound comprised 0.02M 1,1'-dibenzyl-4,4'-dipyridine diperchlorate, 0.001M 2-terbutylanthraquinone and 0.02M 5,10-dihydro-5,10-dimethylphenazine in γ-butyrolactone containing 50% by weight of photosensitive components.

The photosensitive components comprised light-setting compounds as in Example 5. The composition was polymerized to a uniformly solid film directly in the cell by radiation from a 250 W xenon lamp (Uvahand 250) for 40 minutes, with absolutely no segregation.

Total optical transmittance of the visible portion of the spectrum in the final state was 80.5%.

When supplied with a voltage of 1.2 V from a direct-current source, the cell assumed a dark blue colour uniformly over the entire surface. In this case, optical transmittance fell to 8%; total darkening time was 7 seconds; and, when the voltage was cut off and the electrodes shorted, the colour faded uniformly to the colourless state within 12/15 seconds.

### Example 7

A cell was made from two 60x200 mm glass sheets with a surface resistance of 10 ohms/square.

The sheets were offset to form an electrode on the longer side, and were bonded about the edge with two-sided Sellotape, the thickness of which determined a gap of 150 µm between the electrodes.

The cell was filled with the electrochromic solution and the hole sealed as in Example 6.

The photosensitive component comprised an Enterprise "MACROMER" compound (Russian Specification TU2226-021-1048805/-96; Russian Patent N. RU 2087510C1), set in radiation from a 250 W xenon lamp (Uvahand 250).

The electrochromic composition comprised 0.025M 1,1'-dimethyl-4,4'-dipyridine diperchlorate and 0.025M terbutyl ferrocene dissolved in a mixture with 37.5% by weight of the above photosensitive component. Beforehand, the monomers of the photosensitive component were converted to the oligomeric state in radiation from a Uvahand 250 lamp for 1.5 minutes, and then added to 62.5% by weight of γ-butyrolactone.

Following exposure of the cell for 30 minutes, the liquid solution was converted into a uniformly solid film with no segregation.

The cell assumed a uniform colour when supplied with a voltage of 1.2 V, and faded uniformly when the electrodes were shorted.

In radiation from the Uvahand lamp for 50 seconds, total transmittance of the cell in the visible spectrum region ranged between 78.5% and 81%.

### Example 8

A cell was formed as in Example 7.

The cell was filled in the same way as in Example 6.

The electrochromic composition comprised 0.025M 1,1'-dimethyl-4,4'-dipyridine diperchlorate and 0.025M 5,10-dihydro-5,10-dimethylphenazine dissolved in a 37.5% solution of the same photosensitive component as in Example 7, the monomers of which were first converted to the oligomeric state as in Example 7 and then added to 62.5% by weight of γ-butyrolactone.

Following exposure of the cell for 1 hour, the initial liquid electrochromic solution was converted into a uniformly solid film with no segregation.

The cell assumed a uniform colour when supplied with a voltage of 1 V, and faded uniformly when the electrodes were shorted.

In radiation from a 250 W Uvahand lamp, the colour of the cell (80%) remained unchanged.

Clearly, changes may be made to the device as described and illustrated herein without, however, departing from the scope of the present invention.

## Claims

1. A multiple-cell solid-phase electrochromic light-attenuation or light-filtration device (10), comprising a plurality of electrically connected cells (18) containing an electrochromic composition (14) confined between facing supports, said electrochromic composition being a solid-phase composition comprising:
(a) at least a solvent;
(b) at least a cathodic component, which, in the case of reversible electrochemical reduction, is converted to the reduced state with a higher degree of extinction in the visible spectral region;
(c) at least an anodic component, which, in the case of reversible electrochemical oxidation, is converted to the oxidized state with a higher degree of extinction in the visible spectral region;
(d) a UV-polymerized glue composition obtained from an oligomeric or low-molecular-weight polymeric component capable of further UV-polymerization;
and wherein
- the supports of said plurality of electrically connected cells (18) are separated by a plurality of insulating lines formed by glued joints (13) extending between the supports so as to form said plurality of separate cells;
- said glued joints (13) are made of UV-polymerized glue composition.

2. A device as claimed in Claim 1, **characterized in that** said device (10) further comprises two transparent supports (11) facing each other, coated on the adjacent faces with respective transparent current-conducting coatings (12) and supplied by respective supply bars (21,22).

3. A device as claimed in Claim 2, wherein said supply bars (21,22) are inserted inside respective glue joints (13) at opposite ends of the device.

4. A device as claimed in Claim 2 or 3, **characterized in that** said glue composition is added with spacers for maintaining said transparent supports (11) to a predetermined distance from one the other.

5. A method for producing a solid-phase electrochromic light-attenuation or light-filtration device (10), **characterized by** comprising the steps of:
- preparing an electrochromic liquid-phase composition (14) comprising:
(a) at least a solvent;
(b) at least a cathodic component, which, in the case of reversible electrochemical reduction, is converted to the reduced state with a higher degree of extinction in the visible spectral region;
(c) at least an anodic component, which, in the case of reversible electrochemical oxidation, is converted to the oxidized state with a higher degree of extinction in the visible spectral region;
(d) at least a UV-polymerizable glue composition comprising an oligomeric or low-molecular-weight polymeric component capable of further UV-polymerization;
- assembling a multiple-cell so that said device (10) comprises a plurality of electrically connected cells (18) formed by supports separated by a plurality of insulating lines formed by respective glued joints (13) extending between the supports, wherein said lines are made of UV-polymerizable glue composition;
- filling up at least part of said electrically connected cells (18) with said liquid-phase composition (14) including said UV-polymerizable glue composition;
- further polymerizing said UV-polymerizable oligomeric or low-molecular-weight polymeric component by radiation from an electromagnetic radiation source, so as to convert said electrochromic liquid-phase composition and said glued joints (13) to a solid film state.

6. A method as claimed in Claim 5, **characterized in that** said step of assembling a multiple-cell device (10) comprises providing two transparent supports (11) facing each other, coating respective adjacent faces of said transparent supports (11) with respective transparent current-conducting coatings (12), providing said glued joint (13) onto said faces and providing said transparent supports (11) with respective supply bars (21,22), preferably inserted inside respective said glue joints (13) located at opposite ends of the device.

7. A method as claimed in Claim 6, **characterized in that** said glue composition is added with spacers for maintaining said transparent supports (11) to a predetermined distance from each other.

8. A method as claimed in anyone of the foregoing Claims 5 to 7, **characterized in that** said photosensitive polymerizable component is a UV-polymerizable glue in the polyacrylate class.

9. A method as claimed in Claim 8, **characterized in that** said photosensitive polymerizable polyacrylate glue is a LOCTITE™ glue.

10. A method as claimed in anyone of the foregoing Claims 5 to 9, **characterized in that** the weight ratio of said photosensitive polymerizable component to said electrochromic composition (14) ranges from 1:10 to 10:1.

11. A method as claimed Claim 10, **characterized in that** the weight ratio of said photosensitive polymerizable component to said electrochromic composition (14) ranges from 1:3 to 3:1.

12. A method as claimed in anyone of the foregoing Claims 5 to 11, **characterized in that** said electrochromic composition (14) contains, as the cathodic component, at least a viologen having a large-volume anion, such as tripenylcyanoborate or other anions having a similar volume.

13. A method as claimed in Claim 12, **characterized in that** said electrochromic composition (14) contains, as the cathodic component, a mixture of viologens and one of anions: CLO₄-, BF₄-, AsF₆-, PF₆-, NO₃-, or the anion triphenylcyanoborate with a considerably larger ionic radius.

## Patentansprüche

1. Elektrochrome Mehrfachzellen-Festphasen-Lichtschwächungs- oder-Lichtfilterungs-Vorrichtung (10), die eine Mehrzahl elektrisch verbundener Zellen (18) umfaßt, die eine zwischen gegenüberliegenden Trägern eingeschlossene elektrochrome Zusammensetzung (14) enthalten, wobei die elektrochrome Zusammensetzung eine Festphasen-Zusammensetzung ist, mit:
(a) mindestens einem Lösungsmittel;
(b) mindestens einer Kathodenkomponente, die im Fall einer reversiblen elektrochemischen Reduktion in den reduzierten Zustand mit einem höheren Extinktionsgrad im sichtbaren Spektralbereich umgewandelt wird;
(c) mindestens einer Anodenkomponente, die im Fall einer reversiblen elektrochemischen Oxidation in den oxidierten Zustand mit einem höheren Extinktionsgrad im sichtbaren Spektralbereich umgewandelt wird;
(d) einer UV-polymerisierten Kleberzusammensetzung, die aus einer oligomerischen oder polymerischen Komponente mit niedrigem Molekulargewicht erhalten wird, die für eine weitere UV-Polymerisierung geeignet ist; und wobei
- die Träger der Mehrzahl elektrisch verbundener Zellen (18) durch eine Mehrzahl isolierender Leitungen getrennt werden, die durch geklebte Verbindungen (13) gebildet werden, die sich zwischen den Trägern erstrecken, um die Mehrzahl getrennter Zellen zu bilden;
- die geklebten Verbindungen (13) aus einer UV-polymerisierten Kleberzusammensetzung hergestellt sind.

2. Vorrichtung gemäß Anspruch 1, **dadurch gekennzeichnet, dass** die Vorrichtung (10) ferner zwei einander gegenüberliegende transparente Träger (11) umfaßt, die auf den benachbarten Flächen mit jeweiligen transparenten stromleitenden Beschichtungen (12) beschichtet sind und von jeweiligen Versorgungsstangen (21, 22) versorgt werden.

3. Vorrichtung gemäß Anspruch 2, bei der die Versorgungsstangen (21, 22) in jeweilige Kleberverbindungen (13) an entgegengesetzten Enden der Vorrichtung eingefügt sind.

4. Vorrichtung gemäß Anspruch 2 oder 3, **dadurch gekennzeichnet, dass** der Kleberzusammensetzung Abstandshalter zum Halten der transparenten Träger (11) auf einen vorbestimmten Abstand voneinander hinzugefügt werden.

5. Verfahren zum Erzeugen einer elektrochromen Festphasen-Lichtschwächungs- und -Lichtfilterungs-Vorrichtung (10), **gekennzeichnet durch** folgende Schritte:
- Anfertigen einer elektrochromen Flüssigphasen-Zusammensetzung (14) mit:
(a) mindestens einem Lösungsmittel;
(b) mindestens einer Kathodenkomponente, die im Fall einer reversiblen elektrochemischen Reduktion in den reduzierten Zustand mit einem höheren Extinktionsgrad im sichtbaren Spektralbereich umgewandelt wird;
(c) mindestens einer Anodenkomponente, die im Fall einer reversiblen elektrochemischen Oxidation in den oxidierten Zustand mit einem höheren Extinktionsgrad im sichtbaren Spektralbereich umgewandelt wird;
(d) mindestens einer UV-polymerisierbaren Kleberzusammensetzung, die eine oligomerische oder polymerische Komponente mit niedrigem Molekulargewicht aufweist, die für eine weitere UV-Polymerisierung geeignet ist;
- Zusammenbauen einer Mehrfachzelle, so dass die Vorrichtung (10) eine Mehrzahl **durch** Träger gebildete, elektrisch verbundene Zellen (18) umfaßt, die **durch** eine Mehrzahl von Isolierungsleitungen getrennt werden, die **durch** jeweilige geklebte Verbindungen (13) gebildet werden, die sich zwischen den Trägern erstrecken, wobei die Leitungen aus einer UV-polymerisierbaren Kunststoffzusammensetzung hergestellt sind;
- Auffüllen mindestens eines Teils der elektrisch verbundenen Zellen (18) mit der Flüssigphasen-Zusammensetzung (14) einschließlich der UV-polymerisierbaren Kleberzusammensetzung;
- weiteres Polymerisieren der UV-polymerisierbaren oligomerischen oder polymerischen Komponente mit niedrigem Molekulargewicht **durch** Strahlung von einer elektromagnetischen Strahlungsquelle, um die elektrochrome Flüssigphasen-Zusammensetzung und die geklebten Verbindungen (13) in einen Festfilmzustand umzuwandeln.

6. Verfahren gemäß Anspruch 5, **dadurch gekennzeichnet, dass** der Schritt des Zusammenbauens einer Mehrfachzellen-Vorrichtung (10) ein Bereitstellen von zwei einander gegenüberliegenden transparenten Trägern (11), ein Beschichten jeweiliger benachbarter Flächen der transparenten Träger (11) mit jeweiligen transparenten stromführenden Beschichtungen (12), ein Bereitstellen der geklebten Verbindung (13) auf den Flächen und ein Versorgen der transparenten Träger (11) mit jeweiligen Versorgungsstangen (21, 22), die vorzugsweise in jeweilige, an entgegengesetzten Enden der Vorrichtung angeordnete Kleberverbindungen (13) eingefügt werden, umfasst.

7. Verfahren gemäß Anspruch 6, **dadurch gekennzeichnet, dass** der Kleberzusammensetzung Abstandshaltern zum Halten der transparenten Träger (11) auf einem vorbestimmten Abstand voneinander hinzugefügt sind.

8. Verfahren gemäß einem der vorhergehenden Ansprüche 5 bis 7, **dadurch gekennzeichnet, dass** die lichtempfindliche polymerisierbare Komponente ein UV-polymerisierbarer Kleber in der Polyacrylsäureester-Klasse ist.

9. Verfahren gemäß Anspruch 8, **dadurch gekennzeichnet, dass** der lichtempfindliche polymerisierbare Polyacrylsäureester-Kleber ein LOCTITE™-Kleber ist.

10. Verfahren gemäß einem der vorhergehenden Ansprüche 5 bis 9, **dadurch gekennzeichnet, dass** das Gewichtsverhältnis der lichtempfindlichen polymerisierbaren Komponente zu der elektrochromen Zusammensetzung (14) von 1:10 bis 10:1 reicht.

11. Verfahren nach Anspruch 10, **dadurch gekennzeichnet, dass** das Gewichtsverhältnis der lichtempfindlichen polymerisierbaren Komponente zu der elektrochromen Zusammensetzung (14) von 1:3 bis 3:1 reicht.

12. Verfahren gemäß einem der vorhergehenden Ansprüche 5 bis 11, **dadurch gekennzeichnet, dass** die elektrochrome Zusammensetzung (14) als die Kathodenkomponente mindestens ein Viologen mit einem großvolumigen Anion, wie beispielsweise Triphenylcyanoborat, oder weitere Anionen mit einem ähnlichen Volumen umfasst.

13. Verfahren gemäß Anspruch 12, **dadurch gekennzeichnet, dass** die elektrochrome Zusammensetzung (14) als die Kathodenkomponente eine Mischung von Viologenen und eines der Anionen CLO₄-, BF₄-, AsF₆-, PF₆-, NO₃- oder das Anion Triphenylcyanoborat mit einem beträchtlich größeren Ionenradius enthält.

## Revendications

1. Dispositif d'atténuation de la lumière ou de filtrage de la lumière électrochrome en phase solide à cellules multiples (10) comprenant une pluralité de cellules électriquement reliées (18) contenant une composition électrochrome (14) confinée entre des supports en regard, ladite composition électrochrome étant une composition en phase solide comprenant :
(a) au moins un solvant,
(b) au moins un composant cathodique, qui, dans le cas d'une réduction électrochimique réversible, est converti à l'état réduit avec un degré d'extinction plus élevé dans la région spectrale visible,
(c) au moins un composant anodique qui, dans le cas d'une oxydation électrochimique réversible, est converti à l'état oxydé avec un degré d'extinction plus élevé dans la région spectrale visible,
(d) une composition de colle polymérisée aux UV obtenue à partir d'un composant oligomère ou polygomère à faible poids moléculaire capable d'une polymérisation aux UV supplémentaire,
et dans lequel
- les supports de ladite pluralité de cellules électriquement reliées (18) sont séparés par une pluralité de lignes isolantes formées par des joints collés (13) s'étendant entre les supports de façon à former ladite pluralité de cellules séparées,
- lesdits joints collés (13) sont faits de composition de colle polymérisée aux UV.

2. Dispositif selon la revendication 1, **caractérisé en ce que** ledit dispositif (10) comprend en outre deux supports transparents (11) en regard l'un de l'autre, revêtus sur les faces adjacentes de revêtements transparents respectifs conducteurs du courant (12) et alimentés par des barres d'alimentation respectives (21, 22).

3. Dispositif selon 1a revendication 2, dans lequel lesdites barres d'alimentation (21, 22) sont insérées à l'intérieur de joints de colle respectifs (13) aux extrémités opposées du dispositif.

4. Dispositif selon la revendication 2 ou 3, **caractérisé en ce que** ladite composition de colle est additionnée d'éléments d'espacement destinés à maintenir lesdits supports transparents (11) à une distance prédéterminée l'un de l'autre.

5. Procédé de fabrication d'un dispositif d'atténuation de la lumière ou de filtrage de la lumière électrochrome en phase solide (10), **caractérisé en ce qu'**il comprend les étapes consistant à :
- préparer une composition en phase liquide électrochrome (14) comprenant :
(a) au moins un solvant,
(b) au moins un composant cathodique, qui, dans le cas d'une réduction électrochimique, est converti à l'état réduit avec un degré d'extinction plus élevé dans la région spectrale visible,
(c) au moins un composant anodique, qui, dans le cas d'une oxydation électrochimique réversible, est converti à l'état oxydé avec un degré d'extinction plus élevé dans la région spectrale visible,
(d) au moins une composition de colle polymérisable aux UV comprenant un composant oligomère ou polygomère à faible poids moléculaire capable d'une polymérisation aux UV supplémentaire,
- assembler de multiples cellules de sorte que ledit dispositif (10) comprenne une pluralité de cellules électriquement reliées (18) formées par des supports séparés par une pluralité de lignes isolantes formées par des joints collés respectifs (13) s'étendant entre les supports, dans lequel lesdites lignes sont faites d'une composition de colle polymérisable aux UV,
- remplir complètement au moins une partie desdites cellules électriquement reliées (18) avec ladite composition en phase liquide (14) comprenant ladite composition de colle polymérisable aux UV,
- polymériser en outre ledit composant oligomère ou polymère à faible poids moléculaire polymérisable aux UV par un rayonnement provenant d'une source de rayonnement électromagnétique, de façon à convertir ladite composition électrochrome en phase liquide et lesdits joints collés (13) en un état de film solide.

6. Procédé selon la revendication 5, **caractérisé en ce que** ladite étape d'assemblage d'un dispositif à cellules multiples (10) comprend la réalisation de deux supports transparents (11) en regard l'un de l'autre, le revêtement des faces adjacentes respectives desdits supports transparents (11) avec des revêtements transparents conducteurs de courant (12), la réalisation dudit joint collé (13) sur lesdites faces et l'équipement desdits supports transparents (11) de barres d'alimentation respectives (21, 22), insérées de préférence à l'intérieur desdits joints de colle respectifs (13) situés aux extrémités opposées du dispositif.

7. Procédé selon la revendication 6, **caractérisé en ce que** ladite composition de colle est additionnée d'éléments d'espacement destinés à maintenir lesdits supports transparents (11) à une distance prédéterminée l'un de l'autre.

8. Procédé selon l'une quelconque des revendications précédentes 5 à 7, **caractérisé en ce que** ledit composant polymérisable photosensible est une colle polymérisable aux UV de la classe des polyacrylates.

9. Procédé selon la revendication 8, **caractérisé en ce que** ladite colle de polyacrylate polymérisable photosensible est une colle LOCTITE™.

10. Procédé selon l'une quelconque des revendications précédentes 5 à 9, **caractérisé en ce que** le rapport massique dudit composant polymérisable photosensible sur ladite composition électrochrome (14) va de 1:10 à 10:1.

11. Procédé selon la revendication 10, **caractérisé en ce que** le rapport massique dudit composant polymérisable photosensible sur ladite composition électrochrome (14) va de 1:3 à 3:1.

12. Procédé selon l'une quelconque des revendications précédentes 5 à 11, **caractérisé en ce que** ladite composition électrochrome (14) contient, en tant que composant cathodique, au moins un viologène comportant un anion de grand volume, tel qu'un triphénylcyanoborate ou d'autres anions présentant un volume similaire.

13. Procédé selon la revendication 12, **caractérisé en ce que** ladite composition électrochrome (14) contient, en tant que composant cathodique, un mélange de viologènes et l'un des anions : ClO₄⁻, BF₄⁻, AsF₆⁻, PF₆⁻, NO₃⁻, ou l'anion triphénylcyanoborate présentant un rayon ionique considérablement plus grand.
